## Europäisches Patentamt

### European Patent Office

### Office européen des brevets

(11) Veröffentlichungsnummer: **0 056 155 B1**

(12) **EUROPÄISCHE PATENTSCHRIFT**

(45) Veröffentlichungstag der Patentschrift:
14.12.83

(21) Anmeldenummer: 81110808.3

(22) Anmeldetag: 29.12.81

(51) Int. Cl.³: **C 09 D 3/16**, C 08 L 1/18, C 09 D 3/66

---

(54) **Wässrige Dispersionen auf Basis von Cellulosenitraten, Polyestern bzw. Alkydharzen und Aminoplastharzen, Verfahren zu ihrer Herstellung und ihre Verwendung zur Herstellung von Überzügen.**

(30) Priorität: 10.01.81 DE 3100576

(43) Veröffentlichungstag der Anmeldung:
21.07.82 Patentblatt 82/29

(45) Bekanntmachung des Hinweises auf die Patenterteilung:
14.12.83 Patentblatt 83/50

(84) Benannte Vertragsstaaten:
AT DE FR GB IT SE

(56) Entgegenhaltungen:
DE - A - 2 853 578
US - A - 2 506 223
US - A - 2 937 153

(73) Patentinhaber: BAYER AG, Zentralbereich Patente, Marken und Lizenzen, D-5090 Leverkusen 1, Bayerwerk (DE)

(72) Erfinder: Traenckner, Hans-Joachim, Dr., Wedelstrasse 46, D-4150 Krefeld (DE)
Erfinder: Kremer, Wolfgang, Lilienweg 6, D-4173 Kerken 2 (DE)

# Wässrige Dispersionen auf Basis von Cellulosenitraten, Polyestern bzw. Alkydharzen und Aminoplastharzen, Verfahren zu ihrer Herstellung und ihre Verwendung zur Herstellung von Überzügen

Die Erfindung betrifft wässrige Cellulosenitrat/Polyester (bzw. Alkydharz)-Dispersionen, die ein. wasserunlösliches Aminoplastharz als Bestandteil der dispersen Phase enthalten, ein Verfahren zur Herstellung dieser Dispersionen und ihre Verwendung zur Herstellung von Überzügen.

Wässrige Überzugsmittel gewinnen zunehmend an Bedeutung, und zwar nicht nur aus Gründen der Ökologie: Die ständig steigenden Preise für Lackrohstoffe zwingen dazu, mit organischen Lösungsmitteln äusserst sparsam umzugehen, d.h. sie möglichst nur dort einzusetzen, wo sie ohne grösseren Verlust zurückgewonnen werden können.

Einen Ansatz zur ökologisch und ökonomisch sinnvolleren Verwendung organischer Lösungsmittel stellen wässrige Dispersionen dar.

Aus der DE-A 1 286 672 sind wässrige Cellulosenitrat/Weichmacher-Dispersionen bekannt, die u.a. mit Alkydharzen modifiziert werden können. Sie sollen die disperse Phase in Form kugelförmiger Teilchen einer Grösse von 0,1–0,8 μ enthalten und werden hergestellt, indem man Cellulosenitrat in einem flüchtigen organischen Lösungsmittel löst, die erhaltene Lösung in Gegenwart eines Emulgators in Wasser dispergiert und das Lösungsmittel abdestilliert. Dieses Verfahren erweist sich jedoch für die Herstellung feinteiliger stabiler Dispersionen, die neben Cellulosenitrat Alkydharze enthalten, als ungeeignet.

In Weiterentwicklung dieses Standes der Technik lehrt die DE-A 2 853 578, dass man dann besonders feinteilige Cellulosenitrat/Alkydharz-Dispersionen erhält, wenn man als Emulgator

I) ein teilverseiftes Polyvinylacetat mit einem Hydrolysegrad von 70–97%,
II) ein Polyvinylpyrrolidon und/oder
III) ein hydrolysiertes Vinylacetat/Vinylpyrrolidon-Copolymerisat verwendet, wobei die Teilchengrösse der dispersen Phase 0,1–1,5 μ beträgt.

Dispersionen gemäss DE-A 2 853 578 führen zu Überzügen, die zwar gegen Wasser und Alkohol, nicht aber gegen wässrigen Alkohol beständig sind. Versetzt man Dispersionen der DE-A 2 853 578 mit wasserlöslichen Aminoplasten, um so über eine Vernetzung chemikalienfestere Überzüge zu erzielen, so sinkt nach Zusatz des sauren Katalysators die Standzeit der Dispersion auf wenige Stunden, obwohl Cellulosenitrat/Alkydharz-Lacke auf Basis organischer Lösungsmittel auch nach Säurezusatz noch Standzeiten über 24 Stunden aufweisen.

Das sogenannte «Aktivgrundverfahren», wonach man zunächst eine säurehaltige, aber Aminoplast-freie Cellulosenitrat/Alkydharz-Dispersion als Grundierung und anschliessend eine säurefreie Cellulosenitrat/Alkydharz/Aminoplast-Dispersion als Decklack aufbringt, vermeidet das Problem mangelnder Standfestigkeit, ist aber umständlich und erfordert getrennte Lagerhaltung (Zweikomponentensystem). Es bestand also ein Bedürfnis nach wässrigen Cellulosenitrat/Polyester (bzw. Alkydharz)/Aminoplastharz-Dispersionen, die auch nach Zugabe von Säuren noch eine Standfestigkeit von mindestens 24 Stunden aufweisen. Ausserdem ist es wünschenswert, den Gehalt an Koaleszenzmittel – also wasserverdünnbarer Lösungsmittel wie Glykolether oder kurzkettiger Alkohole – möglichst niedrig zu halten.

Es wurde nun gefunden, dass die Verwendung wasserunlöslicher Aminoplastharze überraschenderweise dann die Herstellung wässriger Cellulosenitrat/Polyester bzw. Alkydharz/Aminoplastharz-Dispersionen gestattet, die auch noch nach Säurezugabe die gewünschte Standfestigkeit aufweisen und bereits mit einem geringen Gehalt an Koaleszenzmittel zu trübungsfreien Filmen führen, wenn innerhalb der Teilchen der dispersen Phase eine Mischung aus Cellulosenitrat, Polyester bzw. Alkydharz und wasserunlöslichem Aminoplastharz vorliegt. Derartige Dispersionen lassen sich ohne weiteres dadurch herstellen, dass man zuerst Cellulosenitrat, Polyester bzw. Alkydharz und wasserunlösliches Aminoplastharz miteinander mischt und die erhaltene Mischung dann in Wasser dispergiert.

Gegenstand der Erfindung sind also wässrige Dispersionen aus

A. 5– 35 Gewichtsteilen Cellulosenitrat,
B. 5– 30 Gewichtsteilen Polyester und/oder Alkydharz,
C. 4– 40 Gewichtsteilen Aminoplastharz,
D. 30–300 Gewichtsteilen Wasser und
E. 0,5– 10 Gewichtsteilen Emulgator,

dadurch gekennzeichnet, dass das Aminoplastharz C wasserunlöslich ist und innerhalb der Teilchen der dispersen Phase eine Mischung der Komponenten A, B und C vorliegt.

«Wasserunlöslich» bedeutet in diesem Zusammenhang, dass sich ohne Verwendung weiterer Zusätze nicht mehr als 1 g Aminoplastharz C in 100 g Wasser von 25°C zu einer klaren Lösung lösen lassen.

Weiterer Gegenstand der Erfindung ist ein Verfahren zur Herstellung wässriger Dispersionen aus

A. 5– 35 Gewichtsteilen Cellulosenitrat,
B. 5– 30 Gewichtsteilen Polyester und/oder Alkydharz,
C. 4– 40 Gewichtsteilen Aminoplastharz,
D. 30–300 Gewichtsteilen Wasser und
E. 0,5– 10 Gewichtsteilen Emulgator,

dadurch gekennzeichnet, dass man Cellulosenitrat A, Polyester und/oder Alkydharz B und wasserunlösliches Aminoplastharz C miteinander vereinigt und die erhaltene Mischung in Gegenwart des Emulgators E in Wasser dispergiert.

Ein weiterer Gegenstand der Erfindung ist die Verwendung dieser wässrigen Dispersionen zur Herstellung von Überzügen.

Die erfindungsgemässen wässrigen Dispersionen besitzen auch nach Zusatz von Säure, z.B. p-Toluolsulfonsäure, Standzeiten von mindestens 24 Stunden und führen zu Überzügen, die u.a. gegen Wasser, Alkohol und wässrigen Alkohol resistent sind.

Während aber z.B. für wässrige Cellulosenitrat/Alkydharz/Aminoplastharz-Dispersionen gemäss DE-A-2 853 578 in der Regel 12–17 Gew.-%, bezogen auf den fertigen Lack, Koaleszenzmittel notwendig waren, um klare, trübungsfreie Filme herzustellen, erreicht man dies mit Lacken auf Basis der erfindungsgemässen Dispersionen mit maximal 7,5 Gew.-% Koaleszenzmittel – eine Rohstoffersparnis, die nicht vorhersehbar war.

Als Cellulosenitrate A kommen alle Nitrocellulose-Typen in Frage. Bevorzugte Nitrocellulosen sind die üblichen Collodiumwollequalitäten, d.h. Cellulosesalpetersäureester mit einem Stickstoffgehalt von 10,2 bis 12,4 Gew.-%.

Dabei ist es für die Erfindung nicht wesentlich, ob es sich bei der verwendeten Collodiumwolle um eine Butanol-, Isopropanol-, Ethanol-, Methanol- oder Wasser-feuchte Form handelt oder ob celluloidartige Massen (allgem. Chips genannt), also mit gelatinierenden Weichmachern versetzte Typen, verwandt werden.

Bevorzugte Nitrocellulose-Weichmacher sind insbesondere Phthalsäure- und Adipinsäureester von Alkoholen mit 4 bis 8 Kohlenstoffatomen, z.B. Dibutylphthalat, Diisobutylcarbinylphthalat, Dicyclohexylphthalat, Dioctylphthalat, Dibutylphthalat, Dioctyladipat, Phosphorsäureester von Alkoholen mit 6 bis 10 Kohlenstoffatomen, z.B. Trikresylphosphat, Triphenylphosphat, Trioctylphosphat, Kresylphenylphosphat, Dioctylphenylphosphat, aber auch Diethylenglykolmonolaurat, Dipentaerythrithexapropionat, 2-Methoxiethylacetyl-tributylaconitat, Butoxi-ethyldiglykol-carbonat, Acetyltributylcitrat, Triethylenglykol-pelargonat, Butyldiglykolcarbonat, Polyethylenglykol-di-2-ethyl-hexoat, Triethylenglykol-di-2-ethylbutyrat, Tributylcarballylat, Dibutylsebacat und Benzolsulfonsäure-N-methylamid.

Unter «Alkydharzen» werden in dieser Anmeldung fettsäure- und ölmodifizierte Polyester verstanden.

Unter Alkydharzen und Polyester B versteht man durch Polykondensation nach bekannten Verfahren aus Alkoholen und Carbonsäuren hergestellte Polykondensate der Art, wie sie z.B. in Römpp's Chemielexikon, Band 1, S. 202, Franckh'sche Verlagsbuchhandlung, Stuttgart 1966, definiert oder in Ullmanns Enzykolopädie der Technischen Chemie und in D.H. Solomon, The Chemistry of Organic Filmformers. S. 75 – 101, Robert E. Krieger Pub. Co., New York 1977, beschrieben sind.

Für die Synthese der Polyester bzw. Alkydharze B bevorzugte Alkohole sind aliphatische, cycloaliphatische und/oder araliphatische Alkohole mit 1–15, vorzugsweise 2–6 C-Atomen, und 1–6, vorzugsweise 1–4, an nicht-aromatische C-Atome gebundene OH-Gruppen pro Molekül, z.B. Glykole wie Ethylenglykol, Propandiol-1,2 und -1,3, Butandiol-1,2, -1,3 und 1,4, 2-Ethylpropandiol-1,3, 2-Ethylhexanidol-1,3, Neopentylglykol, Hexandiol-1,6, Cyclohexanidol-1,2 und -1,4, 1,2- und 1,4-Bis-(hydroximethyl)-cyclohexan, Adipinsäure-bis-(ethylenglykolester); Etheralkohole wie Di- und Triethylenglykol, Dipropylenglykol; oxethylierte und perhydrierte Bisphenole; Butantriol-1,2,4, Hexantriol-1,2,6, Trimethylolethan, Trimethylolpropan, Glycerin, Pentaerythrit, Dipentaerythrit, Mannitol und Sorbitol; kettenabbrechende einwertige Alkohole mit 1 bis 6 Kohlenstoffatomen wie Propanol, Butanol, Cyclohexanol und Benzylalkohol. Die gebräuchlichsten Alkohle sind Glycerin, Trimethylolpropan, Neopentylglykol und Pentaerythrit.

Für die Synthese der Polyester bzw. Alkydharze B bevorzugte Säurekomponenten sind aliphatische, cycloaliphatische gesättigte oder ungesättigte und/oder aromatische mehrbasische Carbonsäuren, vorzugsweise Di-, Tri- und Tetracarbonsäuren, mit 2 bis 14, vorzugsweise 4 bis 12 C-Atomen pro Molekül oder deren veresterungsfähige Derivate (z.B. Anhydride oder Ester), z.B. Phthalsäureanhydrid, Isophthalsäure, Terephthalsäure, Tetrahydro- und Hexahydrophthalsäureanhydrid, Endomethylentetrahydrophthalsäure, Bernsteinsäure, Adipinsäure, Sebacinsäure, Trimellithsäure und Trimellithsäureanhydrid, Pyromellithsäureanhydrid und Maleinsäure. Phthalsäureanhydrid ist die gebräuchlichste Säurekomponente.

Für die Herstellung der Polyester bzw. Alkydharze B bevorzugte Monocarbonsäuren sind aliphatische, cycloaliphatische gesättigte und ungesättigte und/oder aromatische Monocarbonsäuren mit 3–24 C-Atomen pro Molekül wie Benzoesäure, p-tert.-Butylbenzoesäure, Tolylsäure, Hexahydrobenzoesäure, Abietinsäure und Milchsäure.

In den für die erfindungsgemässen Dispersionen eingesetzten Alkydharzen B beträgt die Öllänge, berechnet als Triglycerid und bezogen auf das Alkydharz, in der Regel 5 bis 50, vorzugsweise 20 bis 40 Gew.-%. Die trocknenden oder nichttrocknenden Fettsäuren, die im allgemeinen 6 bis 24 C-Atome enthalten, können entweder als solche oder in Form ihrer Glycerinester (Triglyceride) eingesetzt werden.

Als bevorzugt sind pflanzliche und tierische Öle, Fette oder Fettsäuren zu nennen, wie z.B. Kokos-, Erdnuss-, Ricinus-, Holz-, Oliven-, Sojabohnen-, Lein-, Baumwollsaatöl, Saffloröl oder -Ölfettsäuren, dehydratisiertes Ricinusöl bzw. -fettsäure, einfach ungesättigte Fettsäuren, Schmalz, Talg und Trane, Tallölfettsäure sowie synthetische Fettsäuren, die durch Konjugierung oder Isomerisierung aus natürlichen ungesättigten Ölen oder Fettsäuren hergestellt sein können. Bevorzugte gesättigte Fettsäuren sind z.B. Kokosölfettsäuren und α-Ethylhexansäure und Iso-

nonansäure (3,4,4-Trimethylhexansäure) sowie Palmitin- und Stearinsäure und synthetische gesättigte verzweigte Fettsäuren.

Das als Zahlenmittel bestimmte Molekulargewicht der Polyester bzw. Alkydharze B beträgt 2000–10.000 (bis zu Molekulargewichten von 5000 dampfdruckosmometrisch bestimmt in Dioxan und Aceton, wobei bei differierenden Werten der niedrigere Wert als korrekt angesehen wird; bei Molekulargewichten über 5000 menbranosmometrisch bestimmt in Aceton).

Die Polyester bzw. Alkydharze B können nach bekannten Methoden durch Polykondensation hergestellt werden. Im allgemeinen werden die Ausgangsprodukte bei Temperaturen von 140–250°C in einer Intergasatmosphäre, z.B. unter Stickstoff, unter Wasserabspaltung so lange polykondensiert, bis die gewünschte Säurezahl erreicht ist.

Die Polyester bzw. Alkydharze B werden vorzugsweise in nicht-neutralisierter Form eingesetzt.

Wasserunlösliche Aminoplastharze C im Sinne der Erfindung sind gegebenenfalls modifizierte und plastifizierte Harnstoffharze, Melaminharze und im weiteren Sinne Carbamidsäureesterharze, allgemein auch als Urethanharze bezeichnet, sowie Guanamin- und Sulfonamidharze. Es handelt sich dabei jeweils um Kondensationsprodukte von Formaldehyd mit Harnstoff, Melamin, Diaminotriazin und Sulfonamid, die üblicherweise im alkalischen Medium hergestellt werden.

Um Aminoplastharze zu erhalten, die in den gebräuchlichen organischen Lösungsmitteln löslich sind, müssen die stark polaren Gruppen verethert werden: Bei den einfachen Aminoplasten mit Butanol; kompliziertere Aminoplasten werden auch durch Veretherung mit Methanol in organischen Lösungsmitteln löslich. Man erhält dann niedermolekulare Vorkondensate mit einem mittleren Molekulargewicht Mn zwischen 600 und 1400 (dampfdruckosmometrisch in Xylol bestimmt; vgl. Wagner/Sarx, Lackkunstharze, Carl Hanser Verlag, München 1971, S. 61–78, sowie Ullmann's Encyclopädie der Technischen Chemie, Verlag Chemie, Weinheim/Bergstrasse, 1973, S. 403).

Bevorzugte Emulgatoren E werden aus der folgenden Gruppe ausgewählt:

I) teilverseiftes Polyvinylacetat mit einem Hydrolysegrad von 70–97, vorzugsweise 80–92, insbesondere 86–89%,
II) Polyvinylpyrrolidon und
III) hydrolisiertes Vinylacetat/Vinylpyrrolidon-Copolymerisat.

Der Ausdruck «hydrolysiert» im Zusammenhang III) bezieht sich auf die Acetatgruppe der Vinylacetat-Einheiten.

Bevorzugte Emulgatoren E sind Polyvinylalkohole I), die beispielsweise durch Hydrolyse von Polyvinylacetat entstanden sein können. Sie besitzen im allgemeinen ein mittleres Molekulargewicht von 5000 bis 100 000, vorzugsweise 10 000 bis 50 000, insbesondere 25 000 bis 40 000, bestimmt als Zahlenmittel durch Gelpermeationschromatographie, wie es bei L.K. Koopal in Communications Agriculture University Wageningen, The Netherlands, 78/12 (1978) beschrieben ist.

Die als Emulgatoren E verwandten Polyvinylpyrrolidone II haben im allgemeinen einen K-Wert von 25 bis 100, bestimmt, wie im technischen Merkblatt «Luviskol K» vom November 1974 der BASF AG beschrieben.

Die als Emulgatoren E eingesetzten verseiften Vinylacetat/Vinylpyrrolidon-Copolymerisate III haben im allgemeinen einen Pyrrolidongehalt von 50 Mol-% und einen K-Wert von 20 bis 40, bestimmt, wie im technischen Merkblatt «Luviskol VA» vom März 1976 der BASF AG beschrieben.

Die erfindungsgemässen Dispersionen können hergestellt werden, indem man die Komponenten A–C in einem polaren, wasserunlöslichen organischen Lösungsmittel löst, diese Lösung mit der wässrigen Lösung des Emulgators E vereint und durch hohe Scherkräfte eine Öl-in-Wasser-Dispersion bildet. Anschliessend kann das organische Lösungsmittel abdestilliert werden. Bevorzugte organische Lösungsmittel für diesen Zweck sind Essigsäure- und Propionsäure -$C_1$-$C_4$-Alkylester, wie Methyl-, Ethyl-, Propyl- und Isopropyl-acetat bzw. -propionat.

Die resultierende wässrige Dispersion kann mit weiterem Wasser oder mit Koaleszenzmittel verdünnt werden.

Bevorzugte Koaleszenzmittel sind Ethylenglykolmonomethylether, -ethylether, -butyletheracetat, Diethylenglykol, Diethylenglykolmonobutylether, Diacetonalkohol, Methylglykolacetat, Methylamylketon und Diisobutylketon. Die Menge an Koaleszenzmittel richtet sich nach der Viskosität der dispergierten Harze und nach der Temperatur, bei der der Lack getrocknet werden soll.

Zur Erzeugung der Dispersionen eignen sich alle Geräte mit ausreichend hohen Umfangsgeschwindigkeiten, z.B. von 5 bis 50, vorzugsweise 10 bis 30, m/sec. Innerhalb einer oder mehrerer Minuten lassen sich so Dispersionen mit kugelförmigen dispersen Teilchen einer mittleren Grösse von 0,1 bis 1,5, vorzugsweise 0,1 bis 0,5 μm herstellen. Die Teilchengrösse kann mittels Photokorrelationsspektroskopie ermittelt werden.

Die erfindungsgemässen Dispersionen können von der Härtung, die in der Regel bei Temperaturen von 20–50°C erfolgt, mit katalytischen Mengen, vorzugsweise 1–8 Gew.-%, Säure, z.B. p-Toluolsulfonsäure, versetzt werden. Die Dispersionen eignen sich hervorragend zur Herstellung glänzender Überzüge, insbesondere auf Holz.

Die in den folgenden Beispielen genannten Teile sind Gewichtsteile; die Prozentangaben bedeuten Gewichtsprozente.

Beispiele

Beispiel A
Es wurde eine Lösung in Ethylacetat hergestellt aus:

93,75 g Nitrocellulose-Chips, bestehend aus 82 % Collodium-Wolle mit einem Gehalt von ca. 12% Stickstoff (Norm 24E nach DIN 53 179) und 18% Dibutylphthalat als Weichmacher,

93,75 g Erdnussölfettsäurealkydharz mit einem Ölgehalt von 41%,

78,1 g eines butoxilierten, nicht plastifizierten Harnstoff-Formaldehydharzes, 80%ig in Ethylacetat gelöst, und

360 g Ethylacetat.

Nach ca. 3 Stunden Rühren wurde eine klare Lösung erhalten, die mit 375 g einer 3%igen wässrigen Polyvinylalkohol-Lösung (Molekulargewicht 40.000, Hydrosegrad 86–89%) unter langsamem Rühren vereint wurde. Anschliessend dispergierte man die Mischung unter einem Ultra-Turax-(Typ 45)-Labordispergator 5 Minuten lang, indem man die Umdrehungsgeschwindigkeit stufenlos bis auf 10000 U/Min. steigerte. Das Lösungsmittel wurde unter vermindertem Druck abdestilliert. Dabei erhielt man eine Dispersion mit einem Feststoffgehalt von 41,8% und einer Viskosität entsprechend einer Auslaufzeit von 62 sek. (DIN 53 211, DIN-Becher 4).

In einem 500-ml-Gefäss wurden 36 g einer 2%igen wässrigen Methylcellulose-Lösung vorgelegt. Eine Mischung aus 6 g Methylglykol, 6 g Ethylglykol, 6 g Methylglykolacetat, 6 g Ethylglykolacetat, 6 g Diacetonalkohol und 30 g Wasser wurde bei 2000–3000 Umdrehungen/Minute eines Labordissolvers langsam eingetragen und 2 Minuten gerührt. Die erhaltene Mischung wurde unter Rühren in 206 g der oben erhaltenen Dispersion gegeben; ausserdem fügte man noch eine 25%ige wässrige Lösung von 4,6 g p-Toluolsulfonsäure zu.

Der erhaltene Lack wurde in einer Nassfilmschichtdicke von 180 μm auf Glasplatten aufgezogen. Nach Trocknung von 10 Minuten bei 50°C und weiteren 24 Stunden Lagerung bei Raumtemperatur wurde die Pendelhärte nach DIN 53 157 gemessen. Die Viskosität der Lacke wurde nach verschiedenen Zeiten gemäss DIN 53 211 im DIN-Becker 4 bestimmt.

Beispiel B

Analog Beispiel A wurde eine Dispersion aus folgenden Komponenten hergestellt:

118,3 g Nitrocellulose, bestehend aus 65% Collodiumwolle mit ca. 12% Stickstoff (Norm 24E nach DIN 53 179), und 35% Wasser, 16,90 g Dibutylphthalat (Weichmacher)
93,75 g Erdnussölfettsäurealkydharz mit einem Ölgehalt von 41%,
78,1 g eines butoxilierten, nicht plastifizierten Harnstoff-Formaldehydharzes, 80%ig in Ethylacetat gelöst, und
360 g Ethylacetat.

Nach ca. 1 Stunde wurde eine homogene Emulsion erhalten, die mit 333 g einer 3,4%igen wässrigen Polyvinylalkohol-Lösung (Molekulargewicht 40,000, Hydrolysegrad 86–89%) unter langsamem Rühren vereint wurde. Anschliessend verfährt man weiter analog Beispiel A.

Die Lackherstellung und Prüfung erfolgte analog Beispiel A.

Beispiel C (Vergleich)
100 g Nitrocellulose-Chips bestehend aus 82% Collodiumwolle mit ca. 12% Stickstoff (Norm 24E nach DIN 53 179) und 18% Dibutylphthalat,
100 g Erdnussölfettsäurealkylharz mit einem Ölgehalt von 41% und
300 g Ethylacetat wurden vereinigt.

Nach ca. 3 Stunden langsamen Rührens wurde eine klare Lösung erhalten, die mit 300 g einer 3%-igen wässrigen Polyvinylalkohol-Lösung (Molekulargewicht $M_n$ 40.000, Hydrolysegrad 86–89%) unter langsamem Rühren vereinigt wurde. Anschliessend dispergierte man die Mischung unter einem Ultra-Turax-Typ-45-Labordispergator 5 Minuten lang, indem man die Umdrehungsgeschwindigkeit stufenlos bis auf 10000 U/Min. steigerte. Das Lösungsmittel wurde unter vermindertem Druck abdestilliert. Dabei erhielt man eine Dispersion von 41,8% Feststoffgehalt mit einer Viskosität entsprechend einer Auslaufzeit von 34 sek. (DIN 53 211, DIN-Becher 4).

Aus 150 g der erhaltenen Dispersion, 33 g eines methylierten Harnstoff/Formaldehyd-Harzes (60%ige wässrige Lösung), 9 g Methylglykol, 9 g Ethylglykol, 9 g Methylglykolacetat, 9 g Ethylglykolacetat, 9 g Diacetonalkohol, 36 g Wasser und 36 g eines 2%igen wässrigen Methylcellulose-Lösung wurde analog Beispiel A ein Lack hergestellt, appliziert, getrocknet und geprüft.

Die Mengenverhältnisse der einzelnen Komponenten in den Lacken A bis C sind bis auf die Menge der Koaleszenzmischung identisch. Die Menge des Koaleszenzmittels wurde so gewählt, dass sich Lackfilme von gleicher Klarheit und gleichem Verlauf ergaben.

Die folgende Tabelle zeigt die Ergebnisse der Lackprüfungen.

| Pendelhärte [sec] | Anlaufzeit [sec] nach Lagerung von | | | | | | |
|---|---|---|---|---|---|---|---|
| | 0 | 1 | 2 | 4 | 8 | 16 | 20 Std. |
| A   169 | 41 | 66 | 72 | 79 | 93 | 120 | 122 |
| B   165 | 45 | 49 | 72 | 76 | 100 | 113 | 117 |
| C   170 | 46 | 58 | 99 | -* | – | – | – |

* nicht mehr messbar

Sämtliche geprüften Lack ergaben glänzende klare Überzüge.

Patentansprüche

1. Wässrige Dispersionen aus
A.     5– 35 Gewichtsteilen Cellulosenitrat,
B.     5– 30 Gewichtsteilen Polyester und/oder Alkydharz,
C.     4– 40 Gewichtsteilen Aminoplastharz,

D. 30–300 Gewichtsteilen Wasser und
E. 0,5–10 Gewichtsteilen Emulgator,

dadurch gekennzeichnet, dass das Aminoplastharz C wasserunlöslich ist und innerhalb der Teilchen der dispersen Phase eine Mischung der Komponenten A, B und C vorliegt.

2. Dispersionen nach Anspruch 1, dadurch gekennzeichnet, dass die disperse Phase kugelförmige Teilchen mit einer mittleren Grösse von 0,1–1,5 µm enthält.

3. Dispersionen nach Ansprüchen 1 und 2, dadurch gekennzeichnet, dass die disperse Phase kugelförmige Teilchen mit einer mittleren Grösse von 0,1 bis 0,5 µm enthält.

4. Dispersionen nach Ansprüchen 1–3, dadurch gekennzeichnet, dass der Emulgator aus der Gruppe bestehend aus

I) teilverseiftem Polyvinylacetat mit einem Hydrolysegrad von 70–97,
II) Polyvinylpyrrolidon und
III) hydrolisiertem Vinylacetat/Vinylpyrrolidon-Copolymerisat

ausgewählt ist.

5. Dispersionen nach Anspruch 4, dadurch gekennzeichnet, dass das teilverseifte Polyvinylacetat I) einen Hydrolysegrad von 80–92% aufweist.

6. Dispersionen nach Ansprüchen 4 und 5, dadurch gekennzeichnet, dass das teilverseifte Polyvinylacetat I) einen Hydrolysegrad von 86–89% aufweist.

7. Verfahren zur Herstellung wässriger Dispersionen aus

A. 5–35 Gewichtsteilen Cellulosenitrat,
B. 5–30 Gewichtsteilen Polyester und/oder Alkydharz,
C. 4–40 Gewichtsteilen Aminoplastharz,
D. 30–300 Gewichtsteilen Wasser und
E. 0,5–10 Gewichtsteilen Emulgator,

dadurch gekennzeichnet, dass man Cellulosenitrat A, Polyester und/oder Alkydharz B und wasserunlösliches Aminoplastharz C miteinander vereinigt und die erhaltene Mischung in Gegenwart des Emulgators E in Wasser dispergiert.

8. Verfahren nach Anspruch 7, dadurch gekennzeichnet, dass man die Komponenten A–C in einem wasserunlöslichen organischen Lösungsmittel löst, diese Lösung mit einer wässrigen Lösung des Emulgators E unter Anwendung von Scherkräften vereinigt und das organische Lösungsmittel abdestilliert.

9. Verwendung der Dispersionen nach Ansprüchen 1–6 zur Herstellung von Überzügen.

## Claims

1. Aqueous dispersions of

A. 5–35 part by weight of cellulose nitrate,
B. 5–30 parts by weight of polyester and/or alkyd resin,

C. 4–40 parts by weight of aminoplast resin,
D. 30–300 parts by weight of water and
E. 0.5–10 parts by weight of emulsifier,

characterised in that the aminoplast resin C is insoluble in water and a mixture of components A, B and C is present within the particles of the disperse phase.

2. Dispersions according to Claim 1, characterised in that the disperse phase contains spherical particles having an average size of 0.1–1.5 µm.

3. Dispersions according to Claims 1 and 2, characterised in that the disperse phase contains spherical particles having an average size of 0.1 to 0.5 µm.

4. Dispersions according to Claims 1–3, characterised in that the emulsifier is selected from the group consisting of

I) partially saponified polyvinyl acetate having a degree of hydrolysis of 70–97,
II) polyvinyl pyrrolidone and
III) hydrolysed vinyl acetate/vinyl pyrrolidone copolymer.

5. Dispersions according to Claim 4, characterised in that the partially saponified polyvinyl acetate (I) has a degree of hydrolysis of 80–92%.

6. Dispersions according to Claims 4 and 5, characterised in that the partially saponified polyvinyl acetate I) has a degree of hydrolysis of 86–89%.

7. Process for the preparation of aqueous dispersions of

A. 5–35 parts by weight of cellulose nitrate,
B. 5–30 parts by weight of polyester and/or alkyd resin,
C. 4–40 parts by weight of aminoplast resin,
D. 30–300 parts by weight of water and
E. 0.5–10 parts by weight of emulsifier,

characterised in that cellulose nitrate A, polyester and/or alkyd resin B and water-insoluble aminoplast resin C are combined and the resulting mixture is dispersed in water in the presence of the emulsifier E.

8. Process according to Claim 7, characterised in that components A–C are dissolved in a water-insoluble organic solvent, the resulting solution is combined with an aqueous solution of emulsifier E with application of shearing forces, and the organic solvent is distilled off.

9. Use of the dispersions according to Claims 1–6 for the production of coatings.

## Revendications

1. Dispersions aqueuses comprenant

A. 5–35 parties en poids de nitrate de cellulose,
B. 5–30 parties en poids de polyester et/ou de résine alkyd,

C. 4– 40 parties en poids de résine d'aminoplaste,
D. 30–300 parties en poids d'eau et
E. 0,5– 10 parties en poids d'émulsionnant,

caractérisées en ce que la résine d'aminoplaste C est insoluble dans l'eau et un mélange des composants A, B et C est présent à l'intérieur des particules de la phase dispersée.

2. Dispersions suivant la revendication 1, caractérisées en ce que la phase dispersée contient des particules sphériques d'une grosseur moyenne de 0,1 à 1,5 μm.

3. Dispersions suivant les revendications 1 et 2, caractérisées en ce que la phase dispersée contient des particules sphériques d'une grosseur moyenne de 0,1 à 0,5 μm.

4. Dispersions suivant les revendications 1–3, caractérisées en ce que l'émulsionnant est choisi dans le groupe comprenant

I) un acétate de polyvinyle partiellement saponifié ayant un degré d'hydrolyse de 70–97,
II) la polyvinylpyrrolidone et
III) un copolymère d'acétate de vinyle/vinylpyrrolidone hydrolysé.

5. Dispersions suivant la revendication 4, caractérisées en ce que l'acétate de polyvinyle partiellement saponifié I) présente un degré d'hydrolyse de 80–92 %.

6. Dispersions suivant les revendications 4 et 5, caractérisées en ce que l'acétate de polyvinyle partiellement saponifié I) présente un degré d'hydrolyse de 86–89%.

7. Procédé de production de dispersions aqueuses à partir de

A. 5– 35 parties en poids de nitrate de cellulose
B. 5– 30 parties en poids de polyester et/ou de résine alkyd,
C. 4– 40 parties en poids de résine d'aminoplaste,
D. 30–300 parties en poids d'eau et
E. 0,5– 10 parties en poids d'émulsionnant,

caractérisé en ce qu'on réunit le nitrate de cellulose A, le polyester et/ou la résine alkyd B et la résine d'aminoplaste C insoluble dans l'eau et on disperse le mélange obtenu dans de l'eau en présence de l'émulsionnant E.

8. Procédé suivant la revendication 7, caractérisé en ce qu'on dissout les composants A–C dans un solvant organique insoluble dans l'eau, on réunit cette solution avec une solution aqueuse de l'émulsionnant E en utilisant des forces de cisaillement et on chasse le solvant organique par distillation.

9. Utilisation des dispersions suivant les revendications 1–6 pour la production de revêtements.